# EUROPEAN PATENT APPLICATION

(11) **EP 4 808 096 A1**
(43) Date of publication of application: **16.09.2026**
(21) Application number: 24888137.7
(22) Date of filing: 29.10.2024
(51) Int. Cl.: H04M 1/02, A45C 11/24

(54) **MOBILE PHONE CASE WITH COVER FOR PROTECTING THE REAR CAMERA**

(30) Priority: 10.11.2023 ES 202300410 U
(71) Applicant: Beneyto Gomez de Barreda, Pablo Jose, 28016 Madrid (ES)
(72) Inventor: Beneyto Gomez de Barreda, Pablo Jose, 28016 Madrid (ES)
(74) Representative: Canela Giménez, Arturo
(86) International application number: PCT/ES2024/070667
(87) International publication number: WO 2025/099341

(57) **Abstract**

The present invention describes a mobile phone case designed to protect the rear camera by means of a sliding cover, to improve physical safety and user privacy. The case comprises a structure that prevents the protective cover from separating or falling off accidentally, keeping same firmly joined to the case by means of reinforced edges. The invention is intended for the industry of accessories and protection for electronic devices, specifically for mobile phones with an integrated camera.

## Description

### TECHNICAL FIELD OF APPLICATION OF THE INVENTION

With the aim of protecting the cameras of electronic devices equipped with camerasparticularly mobile phones-as well as users' privacy, various mobile phone cases are already available on the market that address this issue by incorporating covers that slide manually to cover or uncover the phone's camera.

However, these commercially available cases have the drawback that the cover over the phone's camera tends to come loose or separate easily from the cover or hard case with use, since it moves within edges that allow it to slide open and closed as they lack any component or mechanism to securely attach the cover to the rest of the case or to prevent it from detaching from the case while still allowing the cover to slide smoothly when opening or closing to fulfill its primary function of covering the camera only when it is not in use. Furthermore, the edges between which the cover slides do not properly cover the edges of the cover, so the cover can very easily be removed from the cover or hard case.

This model of cover or hard case solves this problem by manufacturing the edges of the case with a thicker layer that overlaps the edges of the outer or visible side of the cover, so that the cover slides inside those edges and thus cannot fall off or separate from the hard case or cover.

### BACKGROUND OF THE INVENTION

There are various mobile phone hard cases and/or covers on the market that allow the user to adjust the opening or closing of the camera opening by manually sliding a cover, but none that include an effective manufacturing method to prevent said cover from separating relatively easily from the rest of the body of the mobile phone case or cover.

### EXPLANATION OF THE INVENTION

To address the issue mentioned in the preceding paragraphs, the invention proposes a mobile phone case that is distinguishable by having at least one opaque, sliding cover that allows for manual adjustment of the opening and closing of the holes in the cover or hard case intended for the cameras (front and/or rear) and which is manufactured in such a way that it is not possible for the cover to detaching from the case.

With this invention, the user will no longer have to worry about having to reattach the cover or having to buy a new case if the cover has come loose, because it cannot detach.

This mobile phone case, as well as the cover or covers used to cover the mobile phone's camera or cameras, may have physical characteristics (color, shape, size, etc.) that vary according to its design, provided that they fulfill the functions already indicated, and as long as the material of the cover or covers is opaque in order to prevent visibility through them and that they cannot be detached from the case, although they can slide to adjust the opening or closing of the camera.

Therefore, in this invention, the cover for both the rear camera and the front camera (if the is any) can no longer detach from the case as they usually do, since they will be securely attached to the rest of the case or hard cover.

As will be further described, in this invention, this type of mobile phone case is characterized by manufacturing the edges of the cases with a thicker layer that overlaps the edges of the outer or visible face of the cover, so that the cover slides inside those edges and thus cannot detach from the case.

### DESCRIPTION OF THE DRAWINGS

To complement the description provided herein and assist in a better understanding of the features of the invention, the description is accompanied, as an integral part of it, by drawings in which the following has been drawn for illustrative and non-limiting purposes:
Figure 1. Shows a rear view of a possible execution of the invention in which the case is shown with the protective cover for the rear camera of the mobile phone or electronic device open, in an example in which the cover slides horizontally.
Figure 2. Shows another rear view of a possible execution of the invention in which the case is shown with the protective cover for the rear camera of the mobile phone or electronic device open, in an example in which the cover slides horizontally.
Figure 3. Shows another rear view of a possible execution of the invention in which the case is shown with the protective cover for the rear camera of the mobile phone or electronic device closed, in an example in which the cover slides horizontally.
Figure 4. Shows another rear view of a possible execution of the invention in which the case is shown with the protective cover for the rear camera of the mobile phone or electronic device closed, in an example in which the cover slides horizontally.
Figure 5. Shows another rear view of another possible embodiment of the invention, in which the case or housing is shown with the protective cover for the rear camera of the mobile phone or electronic device exposed, in an embodiment in which said protective cover for the rear camera of the mobile phone slides horizontally.
Figure 6. Shows another rear view of another possible execution of the invention, in which the case is shown with the protective cover for the rear camera of the mobile phone or electronic device closed, in an example in which the cover slides horizontally.
Figure 7. Shows another rear view of another possible execution of the invention, in which the case is shown with the protective cover for the rear camera of the mobile phone or electronic device open, in an example in which the cover slides horizontally.
Figure 8. Shows another rear view of another possible execution of the invention, in which the case is shown with the protective cover for the rear camera of the mobile phone or electronic device closed, in an example in which the cover slides horizontally.
Figure 9. Shows another rear view of another possible execution of the invention, in which the case is shown with the protective cover for the rear camera of the mobile phone or electronic device open, in an example in which the cover slides horizontally.
Figure 10. Shows another rear view of another possible execution of the invention, in which the case with the protective cover for the rear camera of the phone or electronic device is shown open, in an example in which the cover slides vertically.
Figure 11. Shows another rear view of another possible execution of the invention, in which the case with the protective cover for the rear camera of the phone or electronic device is shown closed, in an example in which the cover slides vertically.

### PREFERRED EMBODIMENT OF THE INVENTION

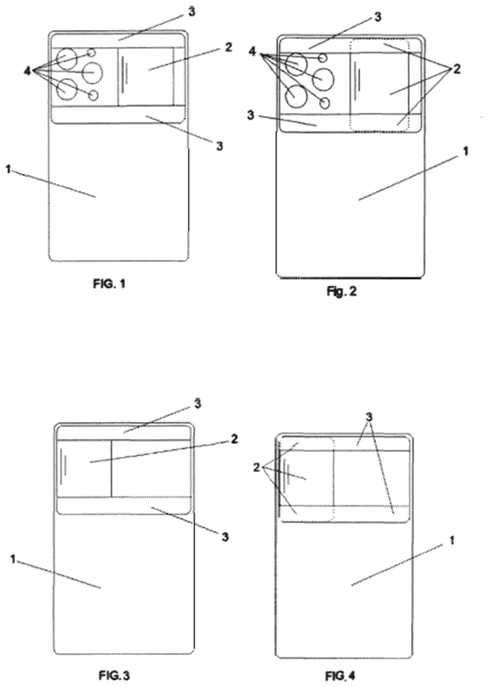

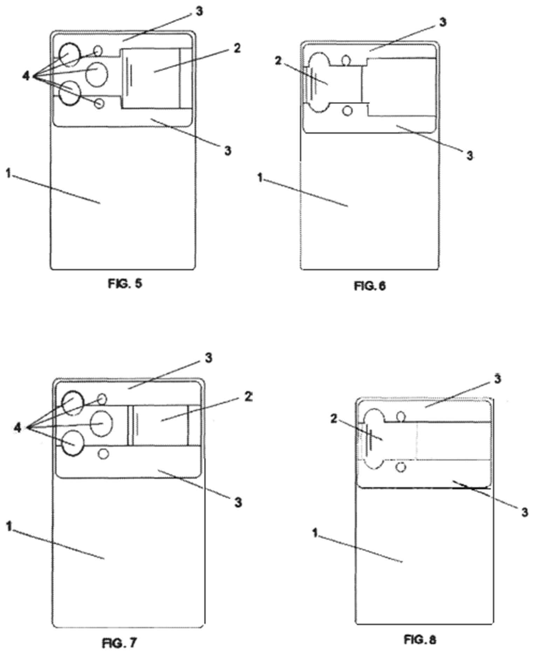

In view of the figures 1-11, in accordance with the adopted numbering, various embodiments of this utility model or invention are shown therein, comprising the parts and elements indicated and described in detail below:
A protective cover (2) on the back of the mobile phone case or hard cover (1) to cover the openings in the case intended for the mobile phone's rear camera (4), which slides manually in a horizontal or vertical direction depending on the mobile phone case or hard cover (1).

This protective cover (2) is characterized in that its upper and lower edges, or, failing that, its right and left side edges, are covered by overlapping rigid sheets (3) to prevent said protective cover (2) from separating or falling off the mobile phone case or hard cover (1) while allowing it to slide horizontally or vertically.

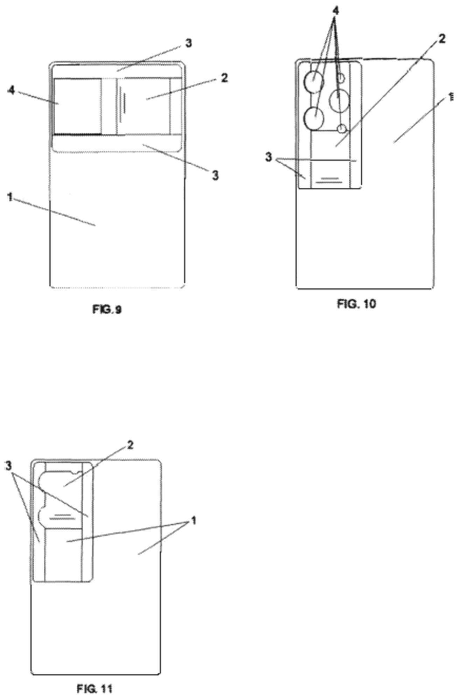

Furthermore, during manufacturing, the position of these overlapping rigid sheets (3) must be adapted depending on whether the protective cover (2) slides horizontally or vertically relative to the mobile phone case or hard cover (1). That is, if the protective cover (2) slides vertically, then its right and left side edges will be covered by these overlapping rigid sheets (3), and so on. This configuration is shown, for example, in Figures 10 and 11.

If the protective cover (2) slides vertically, then its side edges will be covered by these overlapping rigid sheets (3), and if it slides diagonally, the position of these overlapping rigid sheets (3) must be adjusted again.

In a preferred execution, the protective cover (2) slides horizontally, and is therefore characterized in that its upper and lower edges are not visible because they are covered by overlapping rigid sheets (3) that prevent the protective cover (2) from separating or falling off the mobile phone case or hard cover (1) while allowing it to slide. This configuration is shown, for example, in Figures 1-9.

The protective cover (2) could be made of a non-opaque material, as it would still serve to protect the camera; however, this is not recommended, as it would not protect the user's privacy.

## Claims

1. A mobile phone case or hard cover (1) **characterized by** having, on its rear side, a protective cover (2) for the rear camera of the mobile phone (4).

2. The mobile phone case or hard cover (1) according to claim 1, **characterized in that**, the protective cover (2) covered at its top and bottom edges by overlapping rigid sheets (3) configured for the horizontal movement of the protective cover (2).

3. The mobile phone case or hard cover (1) according to claim 1, **characterized in that**, the protective cover (2) covered at its side edges by overlapping rigid sheets (3) configured for the vertical movement of the protective cover (2).

## Amended claims

### Amended claims under Art. 19.1 PCT

1. A mobile phone case or hard cover (1) **characterized by** having, on its rear face, a protective cover (2) for the rear camera of the mobile phone (4), in which the protective cover is being protected at its edges by overlapping rigid sheets (3) that prevent its unintended detachment from the case, allowing it to slide horizontally or vertically.
